# EUROPÄISCHE PATENTANMELDUNG

(11) **EP 2 607 919 A1**
(43) Veröffentlichungstag der Anmeldung: **26.06.2013**
(21) Anmeldenummer: 12197211.1
(22) Anmeldetag: 14.12.2012
(51) Int. Cl.: G01S 7/524, G01S 7/537, G01S 15/93

(54) **Verfahren zum berührungslosen Detektieren eines Objekts in einer Umgebung eines Fahrzeugs, Fahrerassistenzeinrichtung mit einer Ultraschallsensoreinrichtung und Fahrzeug mit einer derartigen Fahrerassistenzeinrichtung**

(30) Priorität: 23.12.2011 DE 102011122318
(71) Anmelder: Valeo Schalter und Sensoren GmbH, 74321 Bietigheim-Bissingen (DE)
(72) Erfinder: Rostocki, Paul-David, 74177 Bad Friedrichshall (DE); Hallek, Michael, 71717 Beilstein (DE)

(57) **Zusammenfassung**

Die Erfindung betrifft ein Verfahren zum berührungslosen Detektieren eines Objekts (7, 10) in einer Umgebung eines Fahrzeugs (1), bei welchem in einem Sendeintervall (I, II) eine Mehrzahl von Ultraschall-Seridesignalen (12 bis 15) ausgesendet wird und zumindest ein Ultraschall-Sendesignal (12 bis 15) an dem Objekt (7, 10) reflektiert wird, welches als Empfangssignal (16 bis 19) empfangen wird und abhängig davon das Objekt (7, 10) erkannt wird, wobei die Ultraschall-Sendesignale (12 bis 15) mit der gleichen Frequenz ausgesendet werden. Die Erfindung betrifft auch eine Fahrerassistenzeinrichtung (2) und ein Fahrzeug (1).

## Beschreibung

Die Erfindung betrifft ein Verfahren zum berührungslosen Detektieren eines Objekts in einer Umgebung eines Fahrzeugs, bei welchem in einem Sendeintervall eine Mehrzahl von Ultraschall- Sendesignalen ausgesendet wird und zumindest ein Ultraschall-Sendesignal an dem Objekt reflektiert wird, welches als Empfangssignat empfangen wird und abhängig davon ein Objekt erkannt wird. Des Weiteren betrifft die Erfindung eine Fahrerassistenzeinrichtung zur Detektion eines Objekts in einer Umgebung eines Fahrzeugs mit einer Ultraschallsensoreinrichtung, welche zum Senden von Ultraschall-Sendesignalen und zum Empfangen von Empfangssignalen ausgebildet ist. Darüber hinaus betrifft die Erfindung auch ein Fahrzeug mit einer Fahrerassistenzeinrichtung.

Fahrerassistenzeinrichtungen sind in vielerlei Ausgestaltung bekannt, wobei insbesondere auch derartige Ausgestaltungen ausgebildet sind, welche mittels einer Mehrzahl von Ultraschallsensoren die Fahrzeugumgebung überwachen. Insbesondere werden hier Objekte in der Umgebung des Fahrzeugs detektiert, um beispielsweise ein Einparken von Fahrzeugen in eine Parklücke durchführen zu können. Darüber hinaus sind auch Fahrerassistenzeinrichtungen bekannt, die beispielsweise einen Totwinkel überwachen oder einen Abstand zu einem vorausfahrenden Fahrzeug Detektieren und gegebenenfalls die Geschwindigkeit reduzieren bzw. ein Abbremsen des Fahrzeugs einleiten.

Aus der DIE 10 2005 033 462 A1 und der DE 38 06 847 A1 sind jeweils Verfahren zur Abstandsmessung bekannt, bei denen ein Ultraschallsensor mehrere Sendesignale unmittelbar hintereinander aussendet ohne zuvor ein Echosignal abzuwarten. Die Sendesignale weisen dabei unterschiedliche Frequenzen auf, sodass auch die zugehörigen Echosignale anhand ihrer Frequenzen voneinander unterschieden werden können. Um die Signale zuverlässig voneinander zu unterscheiden, müssen die Frequenzen der Sendesignale allerdings weit genug voneinander beanstandet sein. Da hierbei die Membran des Ultraschallsensors beim Senden gegebenenfalls mit einer Frequenz angeregt werden muss, die stark von der Eigenfrequenz abweicht, können hohe Leistungsverluste auftreten. Dies ist nachteilig im Hinblick auf die Genauigkeit einer Objekterfassung.

Darüber hinaus ist es bekannt, Messungen mit Ultraschallsensoren in festen zeitlichen Mustern erfolgen. Es wird dabei ein Ultraschall-Sendesignal ausgesendet und in einem bestimmte Zeitfenster abgewartet, bis das Echosignal detektiert wird. Um sicher in einem bestimmte Zeitfenster abgewartet, bis das Echosignal detektiert wird. Um sicher zu sein, dass es ein eigenes ausgesendetes Signal ist, wird dieser Vorgang mehrmals wiederholt und mit dem gegebenenfalls jeweils empfangene Echosignal verglichen. Wenn diese mehrmals übereinstimmend vorliegen, werden sie jeweils als ein eigenes Signal interpretiert, welche von einem Objekt reflektiert werden.

Ein Nachteil dieser Vorgehensweise ist jedoch darin zu sehen, dass die Ultraschallsignale eine relativ lange Laufzeit aufweisen. Bei einer Vorgehensweise wie sie oben erläutert wurde, und bei der zunächst ein Ultraschall-Sendesignal ausgesendet wird, dann gewartet wird, bis das Echosignal detektiert wird, um erst dann in weiteren Sendeintervallen entsprechend fortzufahren, um ein Objekt detektieren zu können, vergeht relativ viel Zeit. Dies ist bei Fahrerassistenzeinrichtungen, die gegebenenfalls relativ schnell detektieren und reagieren müssen, nachteilig. Insbesondere betrifft dies Totwinkel-Assistenzeinrichtungen oder Bremsassistenzeinrichtungen, und beispielsweise auch ACC (Adaptive Cruise Control)- Systeme.

Darüber hinaus ist bei den bekannten Vorgehensweise ein Nachteil darin zu sehen, dass das Objekt nicht genau genug qualifiziert und klassifiziert werden kann, sodass gegebenenfalls die Reaktion der Fahrerassistenzeinrichtung unzutreffend ist.

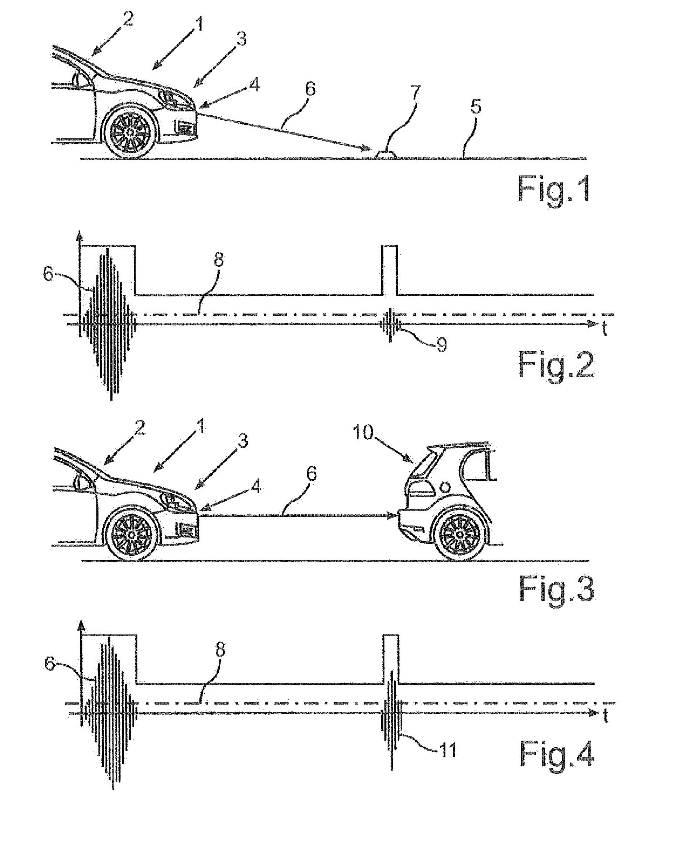

In diesem Zusammenhang ist in Fig. 1 eine Seitenansicht gezeigt, bei der ein Fahrzeug 1 mit einer Fahrerassistenzeinrichtung 2 ausgerüstet ist. Die Fahrerassistenzeinrichtung 2 umfasst eine Ultraschallsensoreinrichtung 3, wobei hier frontseitig am Fahrzeug 1 eine Mehrzahl von Ultraschallsensoren 4 angeordnet ist. Das Fahrzeug 1 bewegt sich auf einer Fahrbahn 5, wobei durch die Ultraschallsensoren vier Sendesignale 6 ausgesendet werden. In der Darstellung gemäß Fig. 1 ist auf der Fahrbahn 5 ein niedriger Bordstein 7 abgebildet. In dem Diagram gemäß Fig. 2, bei dem Signalverläufe über der Zeit dargestellt sind, ist gezeigt, dass das Ultraschall-Sendesignal 6 mit einer Signalamplitude ausgesendet wird, welches größer als ein Amplituden-Schwellwert 8 ist. Das ausgesendete Ultraschall-Sendesignal 6 wird dann an dem Bordstein 7 reflektiert und als Empfangssignal 9 bzw. Echosignal zurückreflektiert. In Fig. 3 ist ein weiters Szenarium gezeigt, bei dem gemäß Ausgestaltungen im Stand der Technik ein ausgesendete Ultraschall-Sendesignal 6 auf ein vorausfahrenden weiteres Fahrzeug 10 trifft und dort reflektiert wird. In Fig. 4 ist dazu wiederum das Diagramm betreffend der Signalverläufe in Abhängigkeit von der Zeit dargestellt, Wie aus den Darstellungen in Fig. 2 und Fig 4 zu erkennen ist, weisen beide reflektierten Empfangssignale 9 und 11 unterschiedliche Amplituden auf, die aufgrund der unterschiedlichen Objekte in Form des Bordsteins 7 einerseits und des weiteren Fahrzeugs 10 andererseits resultieren. Beide Signalamplituden sind jedoch größer als der Amplituden-Schweilwert 8, was bedeutet, das beide Echosignale bzw. Empfangssignale 9 und 11 an eine Auswerteeinheit der Fahrerassistenzeinrichtung 2 übertragen und dort verarbeitet werden. Bei dieser herkömmlichen Vorgehensweise kann jedoch nicht qualifiziert festgestellt werden, um welches Objekt es sich tatsächlich handelt. In beiden Fällen sind nämlich die Empfangssignale 9 und 11 für die Auswertung praktisch gleich, sodass diesbezüglich keine weitere Unterscheidung der detektierten Objekte möglich ist.

Gerade bei den Ausführungen gemäß Fig. 1 bis Fig. 4, bei denen in einem Sendeintervall nur jeweils ein Ultraschall-Sendesignal 6 ausgesendet wird und dann gewartet wird, bis ein Empfangssignal detektiert wird, kann in einem Empfangssignalspektrum auch nicht detektiert werden, ob dieses ein reflektiertes Empfangssignal von einem Objekt umfasst oder ob andere Störsignale empfangen sind.

Es ist Aufgabe der vorliegenden Erfindung, ein Verfahren zum berührungslosen Detektieren eines Objekts in einer Umgebung eines Fahrzeugs, eine Fahrerassistenzeinrichtung sowie ein Fahrzeug mit einer derartigen Fahrerassistenzeinrichtung zu schaffen, mit welchem bzw. bei welchem die Objektdetektion schneller und genauer erfolgen kann.

Diese Aufgabe wird durch ein Verfahren, eine Fahrerassistenzeinrichtung und ein Fahrzeug gemäß den unabhängigen Ansprüchen gelöst.

Bei einem erfindungsgemäßen Verfahren zum berührungslosen Detektieren eines Objekts in einer Umgebung eines Fahrzeugs wird in einem Sendeintervall eine Mehrzahl von Ultraschall-Sendesignalen ausgesendet und zumindest ein Ultraschall-Sendesignat an dem Objekt reflektiert, welches als Empfangssignal empfangen wird und abhängig davon wird das Objekt erkannt. Die Ultraschall-Sendesignale werden mit der gleichen Frequenz ausgesendet. Die oben genannten Nachteile können dadurch behoben werden. Insbesondere kann somit die Objektdetektion genauer und schneller erfolgen, was für spezifische Fahrerassistenzeinrichtungen von besonderem Vorteil ist.

Vorzugsweise ist vorgesehen, dass in einem Sendeintervall bis zu fünf Ultraschall-Sendesignale ausgesendet werden. Die Objektdetektion insbesondere im Hinblick auf das Erkennen zum Unterscheiden von reflektierten Empfangssignalen dieser Sendesignale im Unterschied zu anderen Störsignalen kann dadurch wesentlich verbessert werden.

Vorzugsweise ist vorgesehen, dass die Ultraschall-Sendesignale in Zeitabständen zwischen 1 ms und 2 ms, insbesondere 1,5 ms, in einem Sendeintervall ausgesendet werden. Die Ultraschall-Sendesignale werden daher in äußerst kurzen Zeitabständen aufeinander folgend ausgesendet, wodurch die Schnelligkeit der Objektdetektion begünstigt wird.

Vorzugsweise ist vorgesehen, dass ein Ultraschall-Sendesignal mit einer Signaldauer zwischen 0,8 ms und 1,2 ms, insbesondere 1 ms, ausgesendet wird. Auch dadurch wird die Objetktdetektion wesentlich schneller und gerade im Hinblick auf die auch noch kurz hintereinander ausgesendete Mehrzahl von Ultraschall-Sendesignalen eine präzisere Auswertung der Empfangssignale ermöglicht.

Vorzugsweise wird vorgesehen, dass ein auf ein erstes Ultraschall-Sendesignal folgendes auszusendendes Ultraschall- Sendesignal unabhängig von einem vorhergehenden Empfangen eines Empfangssignals des ersten Ultraschall-Sendesignals ausgesendet wird. Es wird also nicht gewartet, bis nach dem Aussenden des ersten Ultraschall-Sendesignals ein Empfangssignal detektiert wird, um dann erst das weitere Ultraschall-Sendesignal aussenden zu können, sondern das weitere Ultraschall-Sendesignal wird praktisch unabhängig davon, ob von dem ersten Ultraschall-Sendesignal ein Empfangssignal erhalten wird, ausgesendet. Dadurch wird eine erhebliche Zeitverkürzung bei der Objektdetektion erreicht.

Vorzugsweise wird die Zeitdauer eines Sendeintervalls zwischen 40 ms und 60 ms, insbesondere zwischen 45 ms und 55 ms, vorzugsweise 50 ms, festgelegt.

Vorzugsweise wird vorgesehen, dass die Ultraschall-Sendesignale mit unterschiedlichen Signaldauern ausgesendet werden. Dadurch können individuelle Kodierungen von Ultraschall- Sendesignalen erzeugt werden.

Vorzugsweise wird vorgesehen, dass ein zeitlicher Abstand von Signalamplituden zwischen zwei mit gleichen Signalamplituden aufeinander folgend ausgesendeten Ultraschall-Sendesignalen bestimmt wird und bei dazu empfangenen Empfangssignal bestimmt wird, ob zwei Empfangssignale mit gleichen Signalamplituden vorhanden sind, welche den zeitlichen Abstand, wie er zwischen den Signalamplituden der ausgesendeten Ultraschall-Sendesignalen entspricht, aufweisen. Insbesondere abhängig davon, wird dann die Objektdetektion durchgeführt, wobei dies zur Präzision der Objektdetektion beiträgt. Wird nämlich in einem Empfangssignalspektrum ein Auftreten von derartigen zwei Empfangssignalen mit gleichen Signalamplituden und entsprechendem zeitlichen Abstand dieser Signalamplituden im Vergleich zum zeitlichen Abstand der Signalamplituden der ausgesendeten Ultraschall- Sendesignale bestimmt, kann somit sehr schnell und präzise erkannt werden, ob eine Objektdetektion vorliegt oder anderweitige Störsignale empfangen wurden.

Denn so erhält man während einer Sendephase bzw. einem Sendeintervall auf einmal mehrere empfangene Impulse bzw. Empfangssignate. Anhand der Zeiten zwischen den Signalen und anhand der Signalamplituden kann bestimmt werden, ob es sich um ein Echo handelt, welches von dem gleichen Objekt reflektiert wurde, oder ob es sich um Störungen in dem Empfangssignalspektrum handelt. Eine derartige Vorgehensweise ist auch sehr robust gegenüber Dopplereffekten. Zusätzlich kann aus diesen genannten zeitlichen Abständen der Signalamplituden, insbesondere bei mehreren zeitlichen Abständen zwischen mehreren ausgesendeten Ultraschall-Sendesignalen und mehreren zeitlichen Abständen zwischen mehreren Empfangssignalen die Eliminierung des Dopplereffekts verbessert werden.

Die Messdauer des Systems ist durch die Erfindung deutlich reduziert und die Interpretation der Signale kann schneller und genauer erfolgen.

Besonders vorteilhaft ist die Erfindung bei Abständen zwischen dem Fahrzeug und einem Objekt, die nicht unmittelbar im kurzen Nahbereich zum Fahrzeug liegen, sondern beispielsweise größer 1 m, insbesondere größer 1,5 m liegen.

In einer weiteren vorteilhaften Ausgestaltung ist vorgesehen, dass die Ultraschall-Sendesignale mit unterschiedlichen Signalamplituden ausgesendet werden und somit mit unterschiedlichen Intensitäten ein Anregen der Membran eines Ultraschallsensors durchgeführt wird.

Dadurch erhält man in einem Sendeintervall ein oder mehrere empfangene Echos mit unterschiedlichen Amplituden bzw. Intensitäten. Bedingt durch die Richtcharaktaristik eines Ultraschallsensors können dann von einem großen Objekt relativ starke Empfangssignale als Echos erhalten werden, die dann anhand z. B. eines Amplituden-Schweilwerts oder der Betrachtung der Amplituden der Echos und insbesondere abhängig von der Entfernung des Objekts plausibilisiert werden können dahingehend, ob es sich um ein großes oder kleines Objekt handelt oder ob es niedrig oder hoch ist. Durch diese Vorgehensweise kann dann unterschieden werden, ob es sich zum Beispiel als Objekt um ein Fahrzeug oder einen Bordstein handelt.

Darüber hinaus kann durch eine derartige Variation der Signalamplituden der ausgesendeten Ultraschall-Sendesignale auch eine Signalkodierung erfolgen. Es wird quasi die Signalamplitude eines Empfangssignals schon im Sendesignal kodiert, wodurch eine Amplitudenauswertung seitens der Empfangssignale nicht mehr zwingend erforderlich ist.

Vorzugsweise wird eine Mehrzahl von n Ultraschall-Sendesignalen mit unterschiedlichen Signalamplituden ausgesendet, und bei dazu empfangenen Empfangssignalen bestimmt, wie viele Signalamplituden über einen Amplituden-Schwellwert liegen, wobei abhängig davon auf die Höhe und/oder Breite des detektierten Objekts geschlossen werden kann. Auch dies ermöglicht eine sehr detaillierte und präzise sowie schnelle Objekterkennung.

Des Weiteren betrifft die Erfindung eine Fahrerassistenzeinrichtung zur Detektion eines Objekts in einer Umgebung eines Fahrzeugs mit einer Ultraschallsensoreinrichtung, welche zum Senden von Ultraschall- Sendesignalen und zum Empfangen von Empfangssignalen ausgebildet ist, wobei die Fahrerassistenzeinrichtung zum Durchführen erfindungsgemäßen Verfahrens oder einer vorteilhaften Ausgestaltung davon ausgebildet ist.

Insbesondere ist die Fahrerassistenzeinrichtung zur Überwachung eines Totwinkelbereichs des Fahrzeugs und/oder zur Abstandbestimmung zu einem anderen Fahrzeug ausgebildet. Die Abstandsbestimmung zu einem anderen Fahrzeug kann dann Grundlage für ein automatisches Abbremsen des Fahrzeugs sein, wie dies dann bei einer Bremsassistenzeinrichtung als Fahrerassistenzeinrichtung der Fall ist.

Da bei diesen spezifischen Ausgestaltungen von Fahrerassistenzeinrichtungen eine sehr schnelle Objektdetektion erforderlich ist, um gegebenenfalls eine sehr schnelle Reaktion der Fahrerassistenzeinrichtung herbeiführen zu können, ist gerade bei diesen Ausführungen die Erfindung besonders vorteilhaft.

Des Weiteren betrifft die Erfindung ein Fahrzeug mit einer erfindungsgemäßen Fahrerassistenzeinrichtung oder einer vorteilhaften Ausgestaltung davon.

Ausführungsbeispiele der Erfindung werden nachfolgend anhand schematischer Zeichnungen näher erläutert. Dabei zeigen:
- Fig. 1: eine Seitenansicht einer Objektdetektion gemäß dem Stand der Technik;
- Fig. 2: ein Diagramm, in dem Signalverläufe in Abhängigkeit von der Zeit bezüglich der Detektion zu Fig. 1 gezeigt sind;
- Fig. 3: eine Seitenansicht einer weiteren aus dem Stand der Technik bekannten Objetktdetektion;
- Fig. 4: ein Diagramm, bei dem Signalverläufe in Abhängigkeit von der Zeit bezüglich der Objektdetektion in Fig. 4 dargestellt sind;
- Fig. 5: ein Diagramm, bei dem eine Vorgehensweise gemäß einem Ausführungsbeispiel eines erfindungsgemäßen Verfahrens dargestellt ist;
- Fig. 6: ein Diagramm bei dem eine weitere Ausführung eines erfindungsgemäßen Verfahrens dargestellt ist;
- Fig. 7: eine Verkehrssituation analog zu Fig. 1, wobei ein erfindungsgemäßes Fahrzeug dargestellt ist;
- Fig. 8: ein Diagramm, bei dem die Signalverläufe in Abhängigkeit von der Zeit gemäß der Objektdetektion in Fig. 7 gezeigt sind;
- Fig. 9: eine Seitenansicht auf eine Verkehrssituation zur Objektdetektion analog zu Fig. 3, wobei das Fahrzeug mit einem Ausführungsbeispiel einer erfindungsgemäßen Fahrerassistenzeinrichtung ausgerüstet ist, und
- Fig. 10: ein Diagramm, bei dem die Signalverläufe abhängig von der Zeit entsprechend der Objektdetektion in Fig. 9 gezeigt sind.

In den Figuren werden gleiche oder funktionsgleiche Elemente mit den gleichen Bezugszeichen versehen.

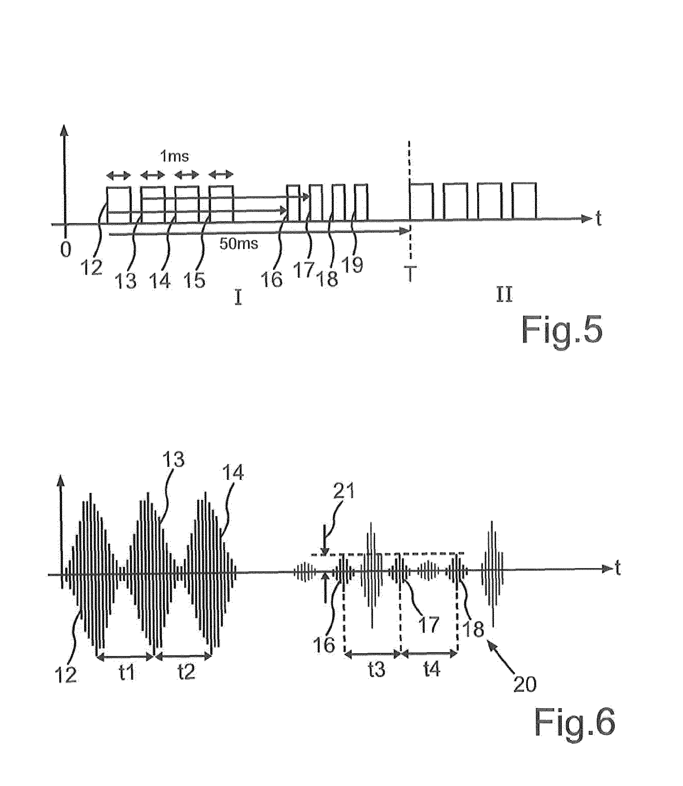

In Fig. 5 ist ein Diagramm gezeigt, bei dem Signalverläufe in Abhängigkeit von der Zeit einer Ultraschallsensoreinrichtung eines Fahrzeugs, die einer Fahrerassistenzeinrichtung, beispielsweise zur Totwinkelüberwachung und/oder zur Abstandsmessung zu einem anderen Fahrzeug zugeordnet ist, ausgesendet werden.

Mittels der Ultraschallsensoreinrichtung werden in einem Sendeintervall, welches sich bis zum Zeitpunkt T erstreckt und welches im Ausführungsbeispiel 50 ms beträgt, aufeinanderfolgend vier Ultraschall-Sendesignale 12, 13, 14 und 15 ausgesendet. Die Ultraschall-Sendesignale 12 bis 15 weisen jeweils eine zeitliche Signalbreite von 1 ms auf und werden in Zeitabständen von 1,5 ms nacheinander ausgesendet. Die Aussendung erfolgt dabei unabhängig davon, ob bereits ein Empfangssignal detektiert wurde.

Wie aus der Darstellung in Fig. 5 zu erkennen ist, wird erst nach einer Zeitdauer von etwa 30 ms ein erstes Echosignal bzw. ein von einem Objekt reflektiertes Sendesignal, nämlich dem ersten Ultraschall-Sendesignal 12, als Empfangssignal 16 empfangen. Darauf folgend werden weitere Empfangssignale 17, 18 und 19 empfangen, die die an dem Objekt reflektierten Ultraschall-Sendesignale 13, 14 und 15 wiedergeben.

Die Ultraschall-Sendesignale 12 bis 15 werden alle mit der gleichen Sendefrequenz ausgesendet.

In der Darstellung gemäß Fig. 5 ist dann bereits angedeutet, dass nachfolgend auf das erste Sendeintervall I ein zweites Sendeintervall II folgt, in dem ebenfalls wiederum nicht mehr näher bezeichnete Ultraschall-Sendesignale ausgesendet werden. Dies erfolgt dann im Hinblick auf die Erläuterung anlog zu dem ersten Sendeintervall I.

In Fig. 6 ist in einer weiteren Ausführung der Erfindung ein Diagramm der Signalverläufe in Abhängigkeit von der Zeit gezeigt. Zur präzisen Objekterfassung und insbesondere zur einfachen und schnellen Erkennung von Störsignalen in einem Empfangssignalspektrum 20 ist vorgesehen, dass Ultraschall-Sendesignale 12, 13 und 14 mit gleichen Signalamplituden ausgesendet werden, wobei die maximalen Signalamplituden gleiche zeitliche Abstände t1 und t2 aufweisen.

Das Empfangssignalspektrum 20 wird dann dahingehend analysiert, ob es Empfangssignale enthält, die ebenfalls gleiche maximale Signalamplituden aufweisen und darüber hinaus den zeitlichen Abständen t1 und t2 entsprechende zeitliche Abstände aufweisen. In der Darstellung gemäß Fig. 6 ist in dem Empfangssignalspektrum 20 ein Auftreten von Empfangssignalen 16, 17 und 18 erkennbar, wobei diese Empfangssignale 16 bis 18 gleiche maximale Signalamplituden 21 aufweisen. Darüber hinaus ist der zeitliche Abstand t3 zwischen den maximalen Signalamplituden der Empfangssignale 16 und 17 entsprechend dem zeitlichen Abstand t1. Darüber hinaus ist der zeitliche Abstand t4 zwischen den maximalen Signalamplituden der Empfangssignale 17 und 18 gleich dem zeitlichen Abstand t2, der sich zwischen den maximalen Signalamplituden der Ultraschall-Sendesignale 13 und 14 bemisst.

Aufgrund dieser Analyse des Empfangssignalsspektrums 20 mit den Kenntnissen aus dem Sendesignalspektrum können unerwünschte und die Objektdetektion gegebenenfalls verfälschende Störsignale leicht erkannt werden bzw. sehr schnell die tatsächlich von einem Objekt reflektierten Empfangssignale 16 bis 18 detektiert werden und eine schnelle und präzise Objetkdetektion erzielt werden.

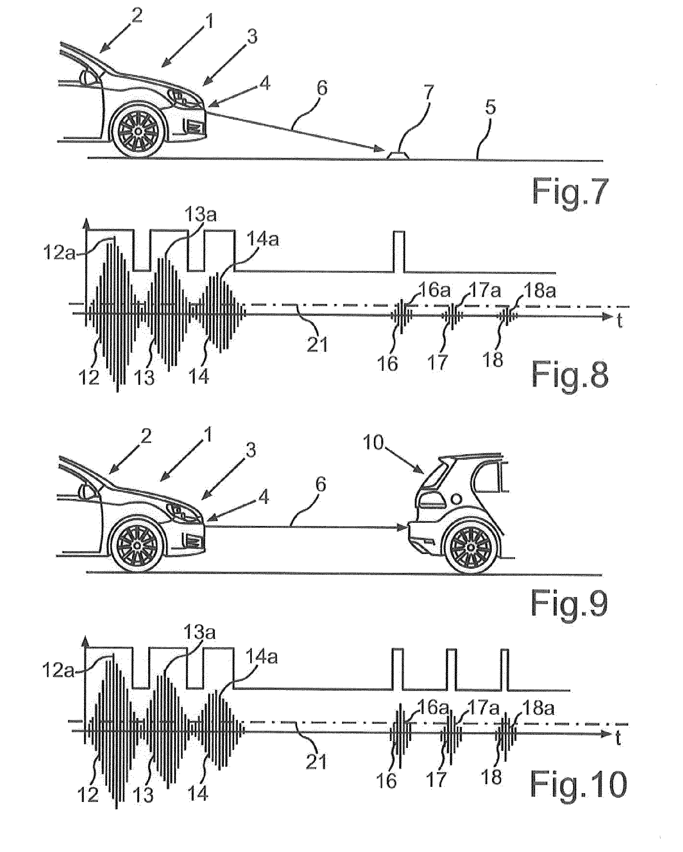

In Fig. 7 ist eine Seitenansicht einer Verkehrssituation analog zu Fig. 1 gezeigt, die auch Ausgangssituation für die Ausführungen, wie sie zu Fig. 5 und Fig. 6 erläutert wurden, sein kann. Ausgehend von der Darstellung in Fig. 7 ist dann noch ein weiteres Ausführungsbeispiel zu erläutern. Das Fahrzeug 1 mit der Fahrerassistenzeinrichtung 2 und einer Ultraschallsensorvorrichtung 3, die frontseitig Ultraschallsensoren 4 aufweist, wovon zumindest einer ein Ultraschall-Sendesignalpaket 6 aussendet, welches dann von einem als Objekt ausgebildeten Bordstein 7, welcher auf einer Fahrbahn 5 angeordnet ist, reflektiert wird.

Bei dem Ausführungsbeispiel ist vorgesehen, dass Ultraschall-Sendesignale 12 bis 14 des Pakets 6 in dem Sendeintervall I ausgesendet werden und diese dazu mit unterschiedlichen maximalen Signalamplituden 12a, 13a und 14a ausgesendet werden.

Die dann empfangenen Echosignale bzw. Empfangssignale 16,17 und 18 variieren diesbezüglich ebenfalls in ihren maximalen Signalamplituden 16a, 17a und 18a. Darüber hinaus ist ein Amplituden-Schwellwert 21 vorgegeben. Die Empfangssignale 16 bis 18 werden dahingehend ausgewertet, ob ihre maximalen Signalamplituden 16a bis 18a über diesen Amplituden-Schwellwert 21 liegen. Der Schwellwert 21 kann dabei individuell festgelegt und variiert werden, wobei dies insbesondere im Hinblick auf eine präzise Objektdetektion erfolgt und dieser Schwellwert 21 derart vorgegeben wird, das große Objekte und somit in der Höhe und/oder Breite entsprechend dimensionierte Objekte von kleineren Objekten unterschieden werden können. In diesem Zusammenhang ist der Bordstein 7 als kleineres Objekt gruppiert und wird auch durch die Auswertung der Empfangssignale 16 bis 18 erkannt, Dies dahingehend, dass die Empfangssignale 17 und 18 mit ihren maximalen Signalamplituden 17a und 18a unterhalb dem Schweilwert 21 liegen. Dies bedeutet, dass das entsprechende Objekt in Form des Bordsteins 7 klein und unbedeutend im Vergleich zu der Größe des Fahrzeugs 1 ist.

Darüber hinaus kann aus der Darstellung in Fig. 8 erkannt werden, das sich die Empfangssignale proportional zu den Sendesignalen im Hinblick auf ihre maximale Signalamplituden verhalten, was bedeutet, dass es sich um ein gleiches Objekt handelt, von dem die Empfangssignale 16 bis 18 reflektierend erhalten werden.

In Fig. 9 ist in einer schematischen Seitenansicht eine weitere Verkehrssituation zur Objektdetektion gezeigt, die analog zur Erläuterung in Fig. 3 ist.

Wie dazu das Diagramm in Fig. 10 zeigt, werden hier wiederum analog zur Ausgestaltung in Fig. 7 mit dem Diagramm gemäß Fig. 8 Ultraschall- Sendesignale 12 bis 14 mit den variierenden maximalen Signalamplituden 12 a, 13 a und 14 a ausgesendet. Der Schwellwert 21 ist wiederum entsprechend vorgegeben. Wie aus dem Diagramm gemäß Fig. 10 zu erkennen ist, ist bei den Empfangssignalen 16 bis 18, die von dem Fahrzeug 10 als Objekt reflektiert werden, gegeben, dass die maximalen Signalamplituden 16a, 17a und 18a über diesen Schwellwert 21 liegen. Dies bedeutet, dass das Objekt in Form des Fahrzeugs 10 im Verhältnis zu dem Fahrzeug 1 auch entsprechend groß ist, sodass durch diese Amplitudenvariiation der Ultraschall-Sendesignale und einem entsprechend definieren Schwellwert 21 auch eine sehr präzise Detektion der Breite und/oder Höhe eines Objekts erfolgt.

## Patentansprüche

1. Verfahren zum berührungslosen Detektieren eines Objekts (7, 10) in einer Umgebung eines Fahrzeugs (1), bei welchem in einem Sendeintervall (I, II) eine Mehrzahl von Ultraschall-Sendesignalen (12 bis 15) ausgesendet wird und zumindest ein Ultraschall-Sendesignal (12 bis 15) an dem Objekt (7, 10) reflektiert wird, welches als Empfangssignal (16 bis 19) empfangen wird und abhängig davon das Objekt (7, 10) erkannt wird,
**dadurch gekennzeichnet, dass**
die Ultraschall-Sendesignale (12 bis 15) mit der gleichen Frequenz ausgesendet werden.

2. Verfahren nach Anspruch 1,
**dadurch gekennzeichnet, dass**
bis zu fünf Ultraschall-Sendesignale (12 bis 15) in dem Sendeintervall (I, II) ausgesendet werden.

3. Verfahren nach Anspruch 1 oder 2,
**dadurch gekennzeichnet, dass**
die Ultraschall-Sendesignale (12 bis 15) in Zeitabständen zwischen 1ms und 2ms, insbesondere 1,5ms, in dem Sendeintervall (I,II) ausgesendet werden.

4. Verfahren nach einem der vorhergehenden Ansprüche,
**dadurch gekennzeichnet, dass**
ein Ultraschall-Sendesignal (12 bis 15) mit einer jeweiligen Signaldauer zwischen 0,8ms und 1,2ms, insbesondere 1ms, ausgesendet wird.

5. Verfahren nach einem der vorhergehenden Ansprüche,
**dadurch gekennzeichnet, dass**
ein auf ein erstes Ultraschall-Sendesignal (12 bis 14) folgendes auszusendenden Ultraschall-Sendesignal (13 bis 15) unabhängig von einem vorherigen erhalten eines Empfangsignals (16 bis 18) des ersten Ultraschall-Sendesignals (12 bis 14) ausgesendet wird.

6. Verfahren nach einem der vorhergehenden Ansprüche,
**dadurch gekennzeichnet, dass**
die Ultraschall-Sendesignale (12 bis 15) mit unterschiedlichen Signaldauern ausgesendet werden.

7. Verfahren nach einem der vorhergehenden Ansprüche,
**dadurch gekennzeichnet, dass**
ein zeitlicher Abstand (t1, t2) von Signalamplituden (1 2a bis 14a) zwischen zwei mit gleichen Signalamplituden (1 2a bis 14a) aufeinander folgend ausgesendeten Ultraschall-Sendesignalen (12 bis 15) bestimmt wird und bei dazu empfangenen Empfangssignalen (16 bis 19) bestimmt wird, ob zwei Empfangssignale (16 bis 19) mit gleichen Signalamplituden vorhanden sind, welche einen dem zeitlichen Abstand (t1, t2) entsprechenden zeitlichen Abstand (t3, t4) aufweisen.

8. Verfahren nach einem der vorhergehenden Ansprüche 1 bis 6,
**dadurch gekennzeichnet, dass**
die Ultraschall-Sendesignale (12 bis 15) mit unterschiedlichen Signalamplituden (12a bis 14a) ausgesendet werden.

9. Verfahren nach Anspruch 8,
**dadurch gekennzeichnet, dass**
eine Mehrzahl von n Ultraschall-Sendesignalen (12 bis 15) mit unterschiedlichen Signalamplituden (12a bis 14a) ausgesendet wird, und bei dazu empfangenen Empfangssignalen (16 bis 19) bestimmt wird, wie viele Signalamplituden (1 6a bis 18a) über einem Amplituden-Schwellwert (21) liegen, und abhängig davon die Höhe und/oder Breite des detektierten Objekts (7, 10) bestimmt wird.

10. Fahrerassistenzeinrichtung (2) zur Detektion eines Objekts (7, 10) in einer Umgebung eines Fahrzrugs (1) mit einer Ultraschalisensoreinrichtung (3), welche zum Senden von Ultraschall-Sendesignalen (12 bis 15) und zum Empfangen von Empfangssignalen (16 bis 19) ausgebildet ist, wobei die Fahrerassistenzeinrichtung (2) zum Durchführen eines Verfahrens nach einem der vorhergehenden Ansprüche ausgebildet ist.

11. Fahrerassistenzeinrichtung (2) nach Anspruch 10,
**dadurch gekennzeichnet, dass**
es zur Totwinkelüberwachung und/oder zur Abstandsbestimmung zu einem anderen Fahrzeug (10) ausgebildet ist.

12. Fahrzeug (1) mit einer Fahrerassistenzeinrichtung (2) nach Anspruch 10 oder 11.
